# EUROPEAN PATENT SPECIFICATION

(11) **EP 3 955 155 B1**
(45) Date of publication and mention of the grant of the patent: **30.09.2026**
(21) Application number: 21174074.1
(22) Date of filing: 17.05.2021
(51) Int. Cl.: G06K 7/10, G07G 1/00

(54) **SETTLEMENT DEVICE**
ABRECHNUNGSVORRICHTUNG
DISPOSITIF DE RÈGLEMENT

(30) Priority: 13.08.2020 JP 2020136567
(43) Date of publication of application: 16.02.2022
(73) Proprietor: Toshiba TEC Kabushiki Kaisha, Tokyo 141-8562 (JP)
(72) Inventor: Naito, Hidehiro, Tokyo, 141-8562 (JP)
(74) Representative: Hoffmann Eitle

(56) References cited:
- EP-A1- 2 414 988
- EP-A1- 2 414 989
- EP-A1- 3 367 293
- EP-A2- 0 421 673
- EP-B1- 2 414 988
- EP-B1- 2 414 989

## Description

### FIELD

Embodiments described herein relate generally to a settlement device, a self-checkout apparatus, and methods related thereto.

### BACKGROUND

In recent years, in a store such as a supermarket or a convenience store, a self-service checkout apparatus (a self-service register) with which a customer himself or herself purchasing commodities performs registration operation and settlement operation for commodities has been used.

Such a self-service checkout apparatus includes a settlement device with which a customer performs registration operation and settlement operation. If the customer performs the registration operation for a commodity in the settlement device, the customer reads a symbol such as a barcode attached to the commodity with an imaging unit, which is configured by a camera, included in a reading unit provided in the self-service checkout apparatus. However, since the customer unaccustomed to the registration operation performs the registration operation, the customer sometimes cannot properly direct the symbol to the reading unit. Accordingly, accuracy of causing the reading unit to image the symbol is sometimes deteriorated if the customer performs the registration operation. Therefore, a recent settlement device includes a plurality of imaging units in a reading unit and is capable of imaging a symbol with any one of the imaging units or the plurality of imaging units even if the symbol is not accurately directed to the reading unit.

Incidentally, in the settlement device, light emitting units are respectively provided near the imaging units in order to urge the customer to direct the symbol to the reading unit and in order to cause the customer to recognize a direction in which the symbol is directed. The customer directs the symbol toward the light emitting unit that emits light, whereby the imaging unit images the symbol.

In fact, WO 2010/114783 A1 and WO 2010/114782 A1 relate to a bar code reader with multiple cameras included in the same housing. Also, EP 3367293 A1 relates to a method (and device) for handling multiple images from different cameras simultaneously.

However, if the light emitting units provided in the plurality of imaging units respectively emit lights, the customer is sometimes confused about to which imaging unit the customer should direct the symbol.

Such a problem occurs not only in the settlement device in the self-service checkout apparatus but also in a settlement device in a normal checkout apparatus operated by a store clerk of a store.

### SUMMARY OF THE INVENTION

The above technical problem is solved by the subject-matter of the independent claims. The dependent claims describe further embodiments, and this description explains how the present invention may be carried out.

One of the objects of the present invention is to improve prior art techniques and overcome at least some of the prior art problems as for instance above illustrated.

According to a first aspect of the present invention, it is provided a settlement device according to claim 1.

Optionally, in the settlement device according to the first aspect of the invention, the first reading component and the second reading component each respectively include a camera that images the commodity, and the light emitting device is a light source for the first reading component and the second reading component to facilitate imaging the commodity.

Optionally, in the settlement device according to the first aspect of the invention, the light source emits light at a fixed interval, and the settlement device further comprises an imaging component configured to expose the first reading component and the second reading component to light and imaging the commodity in synchronization with light emission timing of the light source.

Optionally, in the settlement device according to the first aspect of the invention, an imaging time of the second reading component is longer than an imaging time of the first reading component.

Optionally, in the settlement device according to the first aspect of the invention, the second reading component is less conspicuous than the first reading component.

Optionally, the settlement device according to the first aspect of the invention further comprises a plurality of second reading components.

Optionally, in the settlement device according to the first aspect of the invention, the second reading region partially overlaps the first reading region.

Optionally, in the settlement device according to the first aspect of the invention, the second reading region is completely separate from the first reading region.

According to a second aspect of the present invention, it is provided a settlement method according to claim 7.

Optionally, the settlement method according to the second aspect of the invention further comprises imaging the commodity in the first reading region; imaging the commodity in the second reading region; and emitting light to the first reading region and the second reading region to facilitate imaging the commodity.

Optionally, the settlement method according to the second aspect of the invention further comprises emitting the light at a fixed interval; and exposing the first reading component and the second reading component to light and imaging the commodity in synchronization with light emission timing.

Optionally, in the settlement method according to the second aspect of the invention, an imaging time of the second reading component is longer than an imaging time of the first reading component.

According to a third aspect of the invention, it is provided a self-checkout apparatus according to claim 11.

Optionally, in the self-checkout apparatus according to the third aspect of the invention, the first reading component and the second reading component each respectively include a camera that images the commodity, and the light emitting device is a light source for the first reading component and the second reading component to facilitate imaging the commodity.

Optionally, in the self-checkout apparatus according to the third aspect of the invention, the light source emits light at a fixed interval, and the settlement device further comprises an imaging component configured to expose the first reading component and the second reading component to light and imaging the commodity in synchronization with light emission timing of the light source.

Optionally, in the self-checkout apparatus according to the third aspect of the invention, an imaging time of the second reading component is longer than an imaging time of the first reading component.

Optionally, in the self-checkout apparatus according to the third aspect of the invention, the second reading component is less conspicuous than the first reading component. Optionally, the self-checkout apparatus according to the third aspect of the invention comprises a plurality of second reading components.

Optionally, in the self-checkout apparatus according to the third aspect of the invention, the second reading region partially overlaps the first reading region.

Optionally, in the self-checkout apparatus according to the third aspect of the invention, the second reading region is completely separate from the first reading region.

### DESCRIPTION OF THE DRAWINGS

FIG. 1 is a front view illustrating the exterior of a checkout apparatus in an embodiment;
FIG. 2 is an explanatory diagram for explaining symbol reading in a settlement device;
FIG. 3 is a block diagram illustrating a hardware configuration;
FIG. 4 is a functional block diagram illustrating a functional configuration;
FIG. 5 is a flowchart illustrating control processing;
FIG. 6 is a flowchart illustrating light emission and exposure processing and
FIG. 7 is a timing chart illustrating light emission timing of a light emitting unit and exposure timings of a first imaging unit and a second imaging unit.

### DETAILED DESCRIPTION

An aspect of embodiments is to provide, in order to solve the problem described above, a settlement device that maintains accuracy of symbol reading by a reading unit and prevents a customer from being confused about to which imaging unit the customer should direct a symbol.

A settlement device according to an embodiment includes: a first reading unit configured to read a symbol attached to a commodity located in a first reading region; one or a plurality of second reading units configured to read the symbol attached to the commodity located in a second reading region entirely or partially overlapping the first reading region; and a light emitting unit for causing a customer to recognize a position of the first reading unit. A settlement method according to another embodiment involves reading a symbol attached to a commodity when located in a first reading region by a first reading component; reading the symbol attached to the commodity when located in a second reading region entirely or partially overlapping the first reading region by at least one second reading component; and emitting light to at least the first reading region.

An embodiment is explained below with reference to the drawings. In the embodiment, a settlement device included in a self-service checkout apparatus with which a customer performs registration operation and settlement operation for commodities by himself or herself is explained as an example. In the following explanation in the embodiment, the settlement device includes one second reading unit. However, the invention is not limited by the following embodiment.

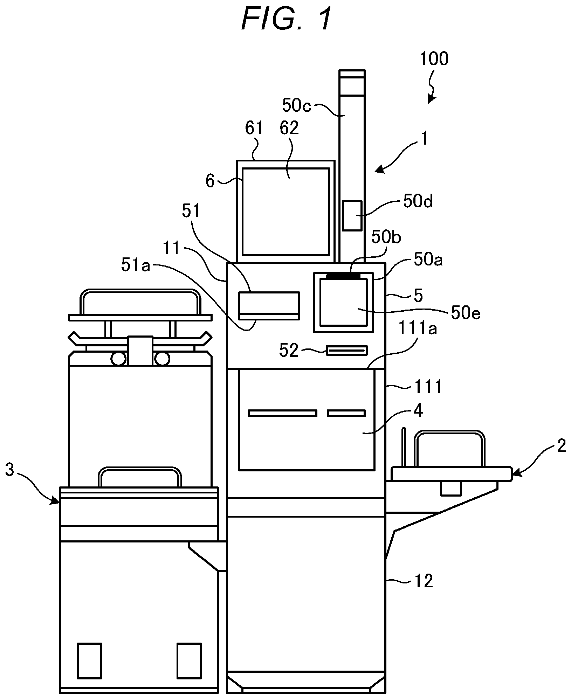

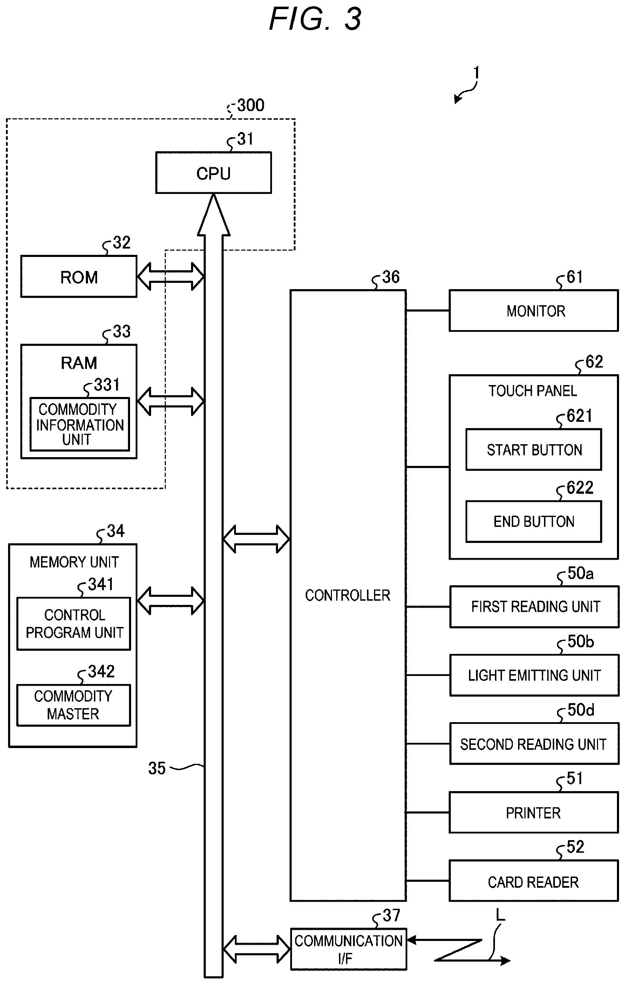

FIG. 1 is a front view illustrating the exterior of a self-service checkout apparatus 100 according to the embodiment. As illustrated in FIG. 1, the self-service checkout apparatus 100 includes a settlement device 1, a basket placing shelf 2, and a packing shelf 3. The settlement device 1 includes a reading unit 5 and a control unit 300 (see FIG. 3) that controls units. The settlement device 1 in the embodiment further includes a depositing and dispensing unit 4 and a display operation unit 6. However, these units are not essential requirements.

The settlement device 1 includes a first housing 11 and a second housing 12. The first housing 11 includes an openable and closable door 111. The door 111 turns in the up-down direction centering on a hinge unit 111a. The first housing 11 houses, on the inside, a bill depositing and dispensing device and a coin depositing and dispensing device (both of which are not illustrated) configuring the depositing and dispensing unit 4. The second housing 12 houses, on the inside, the control unit 300. The settlement device 1 includes a columnar pole 50c erected upward from the reading unit 5.

The reading unit 5 includes a first reading unit 50a and a second reading unit 50d that read the exterior of a commodity and a symbol such as a barcode or a two-dimensional code attached to the commodity in order to specify the commodity.

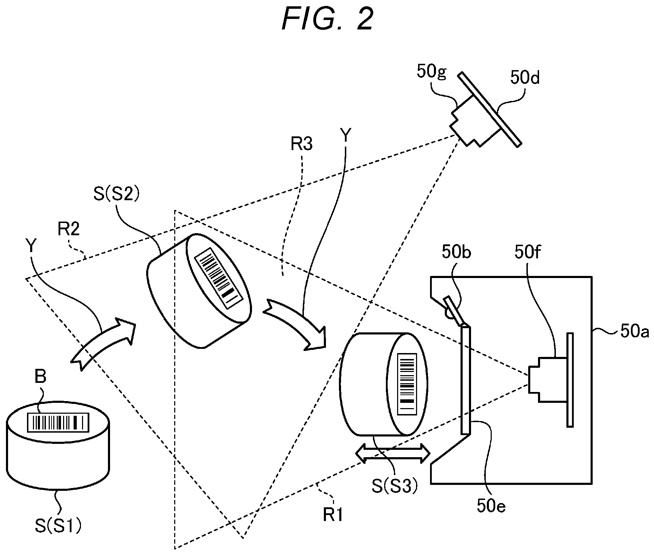

The first reading unit 50a includes a reading window 50e in front of the reading unit 5 and is set with the reading window 50e directed to a customer who operates the settlement device 1. The first reading unit 50a incorporates a camera 50f (see FIG. 2) that images a symbol.

The first reading unit 50a includes, for example, in an upper position of the first reading unit 50a, a light emitting unit 50b configured by LEDs or the like disposed in a row in a lateral direction. The light emitting unit 50b radiates light toward a commodity imaged by the first reading unit 50a. The light emitted from the light emitting unit 50b irradiates the commodity. The light reflected on the commodity is made incident on the camera 50f, whereby the first reading unit 50a images the commodity. The light emitting unit 50b emits light to cause the customer to recognize the position of the first reading unit 50a and to be aware of directing a symbol to the first reading unit 50a.

The second reading unit 50d is set or embedded in the pole 50c. The second reading unit 50d incorporates a camera 50g (see FIG. 2) that images a symbol. The second reading unit 50d is disposed above the first reading unit 50a. The camera 50g is set to be directed obliquely downward. The second reading unit 50d images a symbol attached to a commodity located obliquely downward.

The second reading unit 50d is configured to be less conspicuous compared with the first reading unit 50a. For example, the second reading unit 50d does not include a light source like the light emitting unit 50b. The second reading unit 50d may be embedded in the pole 50c to make the exterior of the second reading unit 50d inconspicuous. The second reading unit 50d may be configured integrally with the pole 50c to make the exterior of the second reading unit 50d inconspicuous. A not-illustrated reading window of the second reading unit 50d may be directed obliquely downward to prevent the second reading unit 50d from coming into the eyes of the customer, who is an operator, and make the exterior of the second reading unit 50d inconspicuous. For example, the second reading unit 50d may be formed smaller than the first reading unit 50a to be inconspicuous. The customer performs commodity registration operation without being aware of such a second reading unit 50d.

The registration operation for commodities means that the customer holds a symbol attached to a commodity over the reading unit 5 and causes the reading unit 5 to image (that is, read) the symbol. Settlement operation is operation for the settlement device 1 to perform settlement processing for the commodity, the symbol of which the customer causes the reading unit 5 to read.

The reading unit 5 includes a printer 51 that prints a receipt relating to commodity sales data processing executed by the control unit 300. In the printer 51, a receipt discharge stand 51a that supports a discharged receipt is projected from the first housing 11. That is, the receipt discharge stand 51a is a convex protrusion provided to project in the first housing 11. First, the reading unit 5 includes a card reader 52 that reads a credit card relating to settlement processing executed by the control unit 300.

The display operation unit 6 includes a monitor 61 and a touch panel 62. The monitor 61 displays characters and images according to the control by the control unit 300. The touch panel 62 is provided on the surface of the monitor 61 and outputs information based on a position operated by the operator (the customer) to the control unit 300.

The basket placing shelf 2 is an article placing stand on which a basket storing commodities to be purchased is placed if the registration operation is performed. The basket placing shelf 2 is provided on one side of the settlement device 1.

The packing shelf 3 is a stand for packing the commodities for which the registration operation is performed. The packing shelf 3 is provided on the other side of the settlement device 1 (the opposite side of the basket placing shelf 2).

The settlement device 1 executes registration processing for displaying, on the monitor 61, commodity information (a commodity name, a price, and the like) of a commodity to which a symbol read by the registration operation is attached and storing the commodity information. If the settlement operation is performed, the settlement device 1 executes, for the commodity subjected to the registration processing, settlement processing for displaying a total amount on the monitor 61, if there is change, dispensing the change from the depositing and dispensing unit 4, and dispensing, from the printer 51, a receipt on which the commodity information and settlement information are printed.

The commodity registration operation in the settlement device 1 performed by the customer is explained.

FIG. 2 is an explanatory diagram for explaining symbol reading in the settlement device 1. As illustrated in FIG. 2, the first reading unit 50a images, with the camera 50f, a symbol attached to a commodity located in a reading region R1 (a first reading region), which is a region located substantially on a side of the first reading unit 50a. The second reading unit 50d images, with the camera 50g, the symbol attached to the commodity located in a reading region R2 (a second reading region), which is a region located obliquely below the second reading unit 50d. The reading region R1 and the reading region R2 partially overlap. A symbol B of a commodity located in an overlapping region R3 can be read by both of the first reading unit 50a and the second reading unit 50d. The reading region R1 and the reading region R2 may entirely overlap.

Since the customer is unaccustomed to registration operation for a commodity S, the customer performs an action for searching for the symbol B attached to the commodity S taken out from a basket. At that time, the customer tends to turn the found symbol B upward. The commodity S, the symbol B of which is turned upward, is a commodity S1. Since the light emitting unit 50b is emitting light, thereafter, the customer performs an action for, while gradually tilting the commodity S1, moving the commodity S1 along arrows Y and bringing the commodityS1 close to the first reading unit 50a. In that process, the commodity S changes to, through a state of a commodity S2 in which the direction of the symbol B is gradually changing from an upward direction to a forward direction, a state of a commodity S3 in which the symbol B faces the direction of the first reading unit 50a.

If the commodity S is in the state of the commodity S2, the symbol B is located in the reading region R2 and faces the direction of the camera 50g. Accordingly, the symbol B of the commodity S2 can be imaged by the second reading unit 50d. The commodity S2 is located in the reading region R1 as well. However, since the symbol B does not face the direction of the camera 50f, the symbol B cannot be imaged by the first reading unit 50a.

If the commodity S is in the state of the commodity S3, the symbol B is located in the reading region R1 and faces the direction of the first reading unit 50a. Accordingly, the symbol B of the commodity S3 can be imaged by the first reading unit 50a.

In this way, in the embodiment, the customer checks the symbol B attached to the commodity S and performs an action of holding the symbol B over the first reading unit 50a in which the light emitting unit 50b is emitting light, whereby the symbol B is read by the second reading unit 50d and the first reading unit 50a. Accordingly, even if the unaccustomed customer performs the registration operation, the customer can surely cause the reading unit 5 to read the symbol B. Since only the light emitting unit 50b is emitting light, the customer only has to hold the symbol B over the first reading unit 50a. It is possible to prevent the customer from being confused about over which of the first reading unit 50a and the second reading unit 50d the customer should hold the symbol B.

A hardware configuration of the settlement device 1 is explained. FIG. 3 is a block diagram illustrating the hardware configuration of the settlement device 1. As illustrated in FIG. 3, the settlement device 1 includes a CPU (Central Processing Unit) 31, a ROM (Read Only Memory) 32, a RAM (Random Access Memory) 33, and a memory unit 34. The CPU 31 functions as a control entity. The ROM 32 stores various programs. Programs and various data are loaded in the RAM 33. The memory unit 34 stores various programs. The CPU 31, the ROM 32, the RAM 33, and the memory unit 34 are connected to one another via a bus 35. The CPU 31, the ROM 32, and the RAM 33 configure the control unit 300. That is, the CPU 31 operates according to a control program stored in the ROM 32 or the memory unit 34 and loaded in the RAM 33, whereby the control unit 300 executes control processing for the settlement device 1 explained below.

The RAM 33 includes a commodity information unit 331. The commodity information unit 331 stores commodity information acquired based on a commodity code acquired based on a read symbol.

The memory unit 34 is configured by a HDD (Hard Disc Drive), a flash memory, or the like and maintains stored content even if a power supply is turned off. The memory unit 34 includes a control program unit 341 and a commodity master 342. The control program unit 341 stores a control program for controlling the settlement device 1. The commodity master 342 stores, for each commodity code for specifying a commodity, commodity information of the commodity.

The control unit 300 is connected to the monitor 61, the touch panel 62, the first reading unit 50a, the light emitting unit 50b, the second reading unit 50d, the printer 51, and the card reader 52 via the bus 35 and a controller 36. The monitor 61 is configured by, for example, a liquid crystal display device and displays commodity information and the like to the customer who operates the settlement device 1. The touch panel 62 is a touch keyboard including a start button 621 and an end button 622 and provided on the monitor 61. The start button 621 is operated by the customer if the customer starts the registration operation by the settlement device 1. The end button 622 is operated by the customer if the customer ends the registration operation by the settlement device 1 and shifts to the settlement operation. The printer 51 prints the commodity information and settlement information and dispenses a receipt. The card reader 52 is used if settlement is performed by a credit card, an electronic money, or the like.

The control unit 300 is connected to a communication interface (I/F) 37 via the bus 35. The communication interface 37 is connected to, via a communication line L, a store server (not illustrated) set in a store and performs transmission and reception of information.

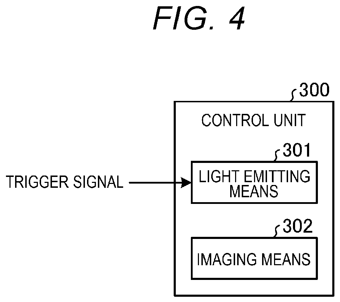

A functional configuration of the settlement device 1 is explained below. FIG. 4 is a functional block diagram illustrating the functional configuration of the settlement device 1. The control unit 300 functions as light emitting means 301 and imaging means 302 according to a control program stored in the ROM 32 or the memory unit 34 and loaded in the RAM 33.

The light emitting means 301 causes the light emitting unit 50b to emit light for a fixed time in synchronization with a trigger signal generated by the reading unit 5. The trigger signal is generated at a predetermined interval (for example, 0.5 ms interval). The light emitting means 301 causes the light emitting unit 50b to emit light for a fixed time in synchronization with timing of a falling edge of the trigger signal.

The imaging means 302 exposes the first reading unit 50a and the second reading unit 50d to light and performs imaging in synchronization with timing when the trigger signal is generated. The imaging means 302 simultaneously starts the exposure of the first reading unit 50a and the second reading unit 50d in synchronization with the timing of the falling edge of the trigger signal (that is, the same timing as the light emission of the light emitting unit 50b by the light emitting means 301). Timing for ending the exposure is earlier in the first reading unit 50a than in the second reading unit 50d. That is, the imaging means 302 sets an exposure time of the second reading unit 50d longer than an exposure time of the first reading unit 50a at the timing when the trigger signal is generated and performs the exposure. Since the first reading unit 50a is located near the light emitting unit 50b, the first reading unit 50a can image the symbol B with a lot of light emitted from the light emitting unit 50b. In contrast, since the second reading unit 50d is located in a position far from the light emitting unit 50b, the second reading unit 50d cannot obtain a lot of light emitted from the light emitting unit 50b. Accordingly, the exposure time of the second reading unit 50d is set longer to take a lot of light.

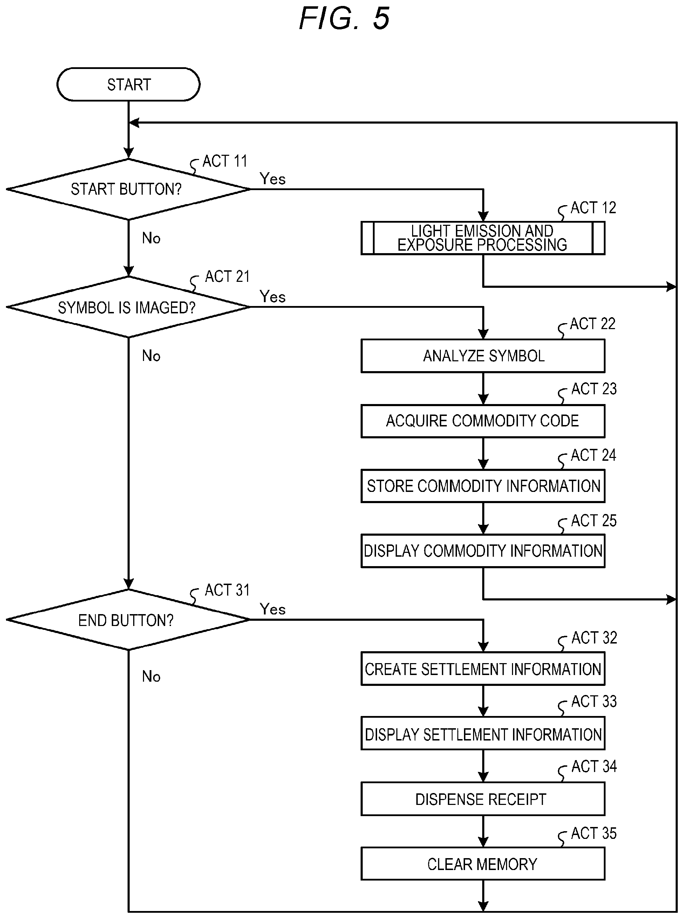

Control of the settlement device 1 is explained below. FIG. 5 is a flowchart illustrating control processing of the settlement device 1. As illustrated in FIG. 5, the control unit 300 of the settlement device 1 determines whether the start button 621 is operated (ACT 11). If determining that the start button 621 is operated (Yes in ACT 11), the control unit 300 performs light emission of the light emitting unit 50b by the light emitting means 301 and exposure processing for the first reading unit 50a and the second reading unit 50b (ACT 12). The control unit 300 returns to ACT 11.

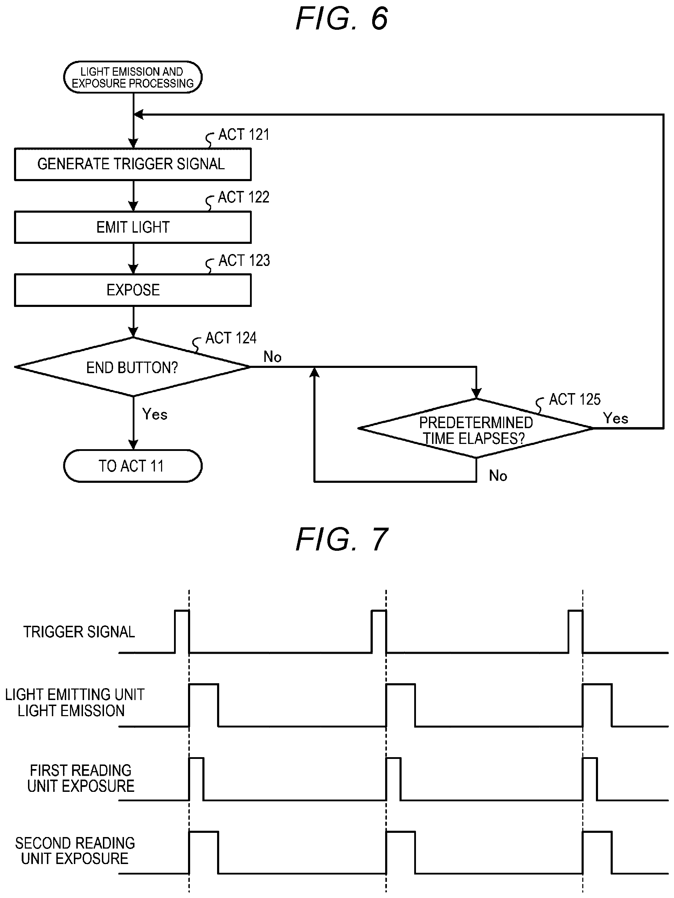

The processing in ACT 12 is explained. FIG. 6 is a flowchart illustrating the processing in ACT 12. As illustrated in FIG. 6, the control unit 300 generates a trigger signal (ACT 121). Subsequently, the light emitting means 301 causes the light emitting unit 50b to emit light for a fixed time in synchronization with the generated trigger signal (ACT 122). The imaging means 302 exposes the first reading unit 50a to light for a first predetermined time simultaneously with the light emission of the light emitting unit 50b (ACT 123). If the commodity attached with the symbol B is located in the reading region R1, the imaging means 302 images the symbol B with the first reading unit 50a in ACT 123. The imaging means 302 exposes the second reading unit 50d to light for a second predetermined time simultaneously with the light emission of the light emitting unit 50b (ACT 123). If the commodity attached with the symbol B is located in the reading region R2, the imaging means 302 images the symbol B with the second reading unit 50d in ACT 14. The first predetermined time is shorter than the second predetermined time.

Subsequently, the control unit 300 determines whether the end button 622 is operated (ACT 124). If determining that the end button 622 is operated (Yes in ACT 124), the control unit 300 returns to ACT 11. On the other hand, if determining that the end button 622 is not operated (No in ACT 124), the control unit 300 determines whether a predetermined time elapses after the trigger signal is generated in ACT 121 (ACT 125). The control unit 300 stays on standby until the predetermined time elapses (No in ACT 125). If determining that the predetermined time elapses (Yes in ACT 125), the control unit 300 returns to ACT 121 and generates the next trigger signal. That is, if the start button 621 is operated, the control unit 300 generates a trigger signal in every predetermined time until the end button 622 is operated and repeats the light emission of the light emitting unit 50b and the exposure of the first reading unit 50a and the second reading unit 50d at timing when the trigger signal is generated.

The timing of the generation of the trigger signal in the processing in ACT 121, the timing of the light emission of the light emitting unit 50b in ACT 122, and the timing of the exposure of the first reading unit 50a and the second reading unit 50d in ACT 123 are explained. FIG. 7 is a timing chart illustrating the light emission timing of the light emitting unit and the timings of the exposure of the first reading unit and the second reading unit. As illustrated in FIG. 7, a trigger signal is generated at a fixed time (for example, every 0.5 ms) interval if the start button 621 is operated. The light emitting unit 50b emits light for the second predetermined time at timing of a falling edge of the trigger signal. At the same time, the exposure of the first reading unit 50a and the second reading unit 50d is started. The exposure of the first reading unit 50a is stopped if the first predetermined time elapses after the exposure is started. The exposure of the second reading unit 50d is stopped if the second predetermined time elapses after the exposure is started. This operation is repeated until the end button 622 is operated.

Referring back to FIG. 5, if determining that the start button 621 is not operated (No in ACT 11), the control unit 300 determines whether the first reading unit 50a or/and the second reading unit 50d image the symbol (ACT 21). If determining that the first reading unit 50a or/and the second reading unit 50d image the symbol B (Yes in ACT 21), the control unit 300 analyzes the imaged symbol B (ACT 22) and acquires a commodity code for specifying the commodity attached with the symbol B (ACT 23). The control unit 300 searches through the commodity master 342 based on the acquired commodity code, acquires commodity information corresponding to the commodity code, and stores the commodity information in the commodity information unit 331 (ACT 24). The control unit 300 displays the acquired commodity information on the monitor 61 (ACT 25) . The control unit 300 returns to ACT 11.

If determining that the symbol is not imaged (No in ACT 21), the control unit 300 determines whether the end button 622 is operated (ACT 31). If determining that the end button 622 is operated (Yes in ACT 31), the control unit 300 creates settlement information based on the commodity information stored in the commodity information unit 331 (ACT 32). That is, the control unit 300 creates a total amount of a transaction of this time and, if there is change, a change amount and the like. The control unit 300 displays the created settlement information on the monitor 61 (ACT 33). The control unit 300 operates the printer 51 to print the commodity information and the settlement information and dispenses a receipt (ACT 34). The control unit 300 clears the commodity information stored in the commodity information unit 331 (ACT 35). The control unit 300 returns to ACT 11.

Such a settlement device 1 includes the first reading unit 50a that reads the symbol B attached to the commodity S located in the reading region R1, one or a plurality of second reading units 50d that read the symbol B attached to the commodity S located in the reading region R2 entirely or partially overlapping the reading region R1, and the light emitting unit 50b for causing a customer to recognize the position of the first reading unit 50a. Therefore, in a process of holding the commodity S over the first reading unit 50a recognized by the light emitting unit 50b, the second reading unit 50d images the symbol B attached to the commodity S in the reading region R2. The first reading unit 50a images the symbol B attached to the commodity S in the reading region R1. Accordingly, it is possible to prevent the customer from being confused about to which imaging unit the customer should direct the symbol. Even if an unaccustomed customer performs commodity registration operation, the customer can accurately image the symbol B.

The embodiment of the present invention is explained above. However, this embodiment is presented as an example and is not intended to limit the scope of the invention. This embodiment can be implemented in other various forms. The scope of the invention is defined by the appended claims.

For example, in the embodiment, the light emitting unit 50b is a light source for irradiating the symbol B for the first reading unit 50a and the second reading unit 50d to image the symbol B. However, not only this, but the light emitting unit 50b may be a light source provided, in order to cause the customer to recognize the position of the first reading unit 50a, separately from the light source for irradiating the symbol **B.**

In the above explanation in the embodiment, the settlement device 1 includes one second reading unit 50d. However, not only this, but the settlement device 1 may include two or more second reading units 50d. In this case, the light emitting unit 50b is provided only near the first reading unit 50a.

In the embodiment, the first reading unit 50a and the second reading unit 50d image the symbol B using the cameras. However, not only this, but the first reading unit 50a and the second reading unit 50d may be devices that optically read the symbol B.

In the embodiment, the settlement device 1 is explained as a component of the self-service checkout apparatus 100. However, not only this, but the settlement device 1 may be a component of a normal checkout apparatus with which, rather than a customer himself or herself, a store clerk or the like of a store performs operation.

## Claims

1. A settlement device (1), comprising:
a first reading component (50a) configured to read a symbol (B) attached to a commodity (S) when located in a first reading region (R1);
**characterized by**
at least one second reading component (50d) configured to read the symbol (B) attached to the commodity (S) when located in a second reading region (R2) completely separate from the first reading region (R1); and
a light emitting device (50b) provided in the first reading component (50a),
wherein the at least one second reading component (50d) does not include a light source.

2. The settlement device (1) according to claim 1, wherein
the first reading component (50a) and the second reading component (50d) each respectively include a camera (50f, 50g) that images the commodity (S), and
the light emitting device (50b) is a light source for the first reading component (50a) and the second reading component (50d) to facilitate imaging the commodity (S).

3. The settlement device (1) according to claim 1 or 2, wherein
the light source emits light for a predetermined time at a fixed time interval, and
the settlement device (1) further comprises an imaging component (302) configured to expose the first reading component (50a) and the second reading component (50d) to light and imaging the commodity (S) in synchronization with light emission timing of the light source.

4. The settlement device (1) according to any one of claims 1 to 3, wherein an imaging time of the second reading component (50d) is longer than an imaging time of the first reading component (50a).

5. The settlement device (1) according to any one of claims 1 to 4, wherein the second reading component (50a) is less conspicuous than the first reading component (50d).

6. The settlement device (1) according to any one of claims 1 to 5 comprising a plurality of second reading components (50d).

7. A settlement method carried out by a settlement device (1) comprising a first reading component (50a), a second reading component (50d) and a light emitting device (50b), the method comprising:
by the first reading component (50a), reading a symbol (B) attached to a commodity (S) when located in a first reading region (R1) by a first reading component (50a);
by the second reading component (50d), reading the symbol (B) attached to the commodity (S) when located in a second reading region (R2) completely separate from the first reading region (R1) by at least one second reading component (50d); and
by the light emitting device (50b), emitting light to at least the first reading region (R1), wherein the light emitting device (50b) is provided in the first reading component (50a),
wherein the second reading component (50d) does not include a light source.

8. The settlement method according to claim 7, further comprising steps of:
by the first reading component (50a), imaging the commodity (S) in the first reading region (R1);
by the second reading component (50b), imaging the commodity (S) in the second reading region (R2); and
by the light emitting device (50b), emitting light to the first reading region (R1) and the second reading region (R2) to facilitate imaging the commodity (S).

9. The settlement method according to claim 7 or 8, further comprising steps of:
by the light emitting device (50b), emitting the light for a predetermined time at a fixed time interval; and
by the light emitting device (50b), exposing the first reading component (50a) and the second reading component (50b) to light and, by the first reading component (50a) and by the second reading component (50b), imaging the commodity (S) in synchronization with light emission timing.

10. The settlement method according to any one of claims 7 to 9, wherein an imaging time of the second reading component (50d) is longer than an imaging time of the first reading component (50a).

11. A self-checkout apparatus (100), comprising:
a registration device; and
a settlement device (1) according to any one of claims 1 to 6.

## Patentansprüche

1. Abrechnungsvorrichtung (1), umfassend:
eine erste Lesekomponente (50a), die ausgebildet ist, ein an einer Ware (S) angebrachtes Symbol (B) zu lesen, wenn in einem ersten Lesebereich (R1) gelegen;
**gekennzeichnet durch**
mindestens eine zweite Lesekomponente (50d), die ausgebildet ist, das an der Ware (S) angebrachte Symbol (B) zu lesen, wenn in einem zweiten Lesebereich (R2) gelegen, der vollständig von dem ersten Lesebereich (R1) getrennt ist; und
eine Leuchtvorrichtung (50b), die in der ersten Lesekomponente (50a) bereitgestellt ist,
wobei die mindestens eine zweite Lesekomponente (50d) keine Lichtquelle einschließt.

2. Abrechnungsvorrichtung (1) nach Anspruch 1, wobei
sowohl die erste Lesekomponente (50a) als auch die zweite Lesekomponente (50d) jeweils eine Kamera (50f, 50g) einschließen, die die Ware (S) abbildet, und
die Leuchtvorrichtung (50b) eine Lichtquelle für die erste Lesekomponente (50a) und die zweite Lesekomponente (50d) ist, um das Abbilden der Ware (S) zu erleichtern.

3. Abrechnungsvorrichtung (1) nach Anspruch 1 oder 2, wobei
die Lichtquelle Licht für eine vorbestimmte Zeit in einem festen Zeitintervall ausstrahlt, und
die Abrechnungsvorrichtung (1) weiter eine Abbildungskomponente (302) umfasst, die ausgebildet ist, die erste Lesekomponente (50a) und die zweite Lesekomponente (50d) dem Licht gegenüber auszusetzen und die Ware (S) zeitgleich mit dem Timing der Lichtausstrahlung der Lichtquelle abzubilden.

4. Abrechnungsvorrichtung (1) nach einem der Ansprüche 1 bis 3, wobei eine Abbildungszeit der zweiten Lesekomponente (50d) länger ist als eine Abbildungszeit der ersten Lesekomponente (50a).

5. Abrechnungsvorrichtung (1) nach einem der Ansprüche 1 bis 4, wobei die zweite Lesekomponente (50a) weniger auffällig ist als die erste Lesekomponente (50d).

6. Abrechnungsvorrichtung (1) nach einem der Ansprüche 1 bis 5, umfassend eine Vielzahl von zweiten Lesekomponenten (50d).

7. Abrechnungsverfahren, das von einer Abrechnungsvorrichtung (1) durchgeführt wird, die eine erste Lesekomponente (50a), eine zweite Lesekomponente (50d) und eine Leuchtvorrichtung (50b) umfasst, wobei das Verfahren Folgendes umfasst:
durch die erste Lesekomponente (50a), Lesen eines Symbols (B), das an einer Ware (S) angebracht ist, wenn in einem ersten Lesebereich (R1) gelegen, durch eine erste Lesekomponente (50a);
durch die zweite Lesekomponente (50d), Lesen des Symbols (B), das an der Ware (S) angebracht ist, wenn in einem zweiten Lesebereich (R2) gelegen, der vollständig von dem ersten Lesebereich (R1) getrennt ist, durch mindestens eine zweite Lesekomponente (50d); und
durch die Leuchtvorrichtung (50b), Ausstrahlen von Licht auf den ersten Lesebereich (R1), wobei die Leuchtvorrichtung (50b) in der ersten Lesekomponente (50a) bereitgestellt ist,
wobei die zweite Lesekomponente (50d) keine Lichtquelle einschließt.

8. Abrechnungsverfahren nach Anspruch 7, weiter umfassend die folgenden Schritte:
durch die erste Lesekomponente (50a), Abbilden der Ware (S) im ersten Lesebereich (R1);
durch die zweite Lesekomponente (50b), Abbilden der Ware (S) im zweiten Lesebereich (R2); und
durch die Leuchtvorrichtung (50b), Ausstrahlen von Licht auf den ersten Lesebereich (R1) und den zweiten Lesebereich (R2), um das Abbilden der Ware (S) zu erleichtern.

9. Abrechnungsverfahren nach Anspruch 7 oder 8, weiter umfassend die folgenden Schritte:
durch die Leuchtvorrichtung (50b), Ausstrahlen des Lichts für eine vorbestimmte Zeit in einem festen Zeitintervall; und
durch die Leuchtvorrichtung (50b), Aussetzen der ersten Lesekomponente (50a) und der zweiten Lesekomponente (50b) gegenüber dem Licht, und durch die erste Lesekomponente (50a) und die zweite Lesekomponente (50b), Abbilden der Ware (S) zeitgleich mit dem Timing der Lichtausstrahlung.

10. Abrechnungsverfahren nach einem der Ansprüche 7 bis 9, wobei eine Abbildungszeit der zweiten Lesekomponente (50d) länger ist als eine Abbildungszeit der ersten Lesekomponente (50a).

11. Self-Checkout-Einrichtung (100), umfassend:
eine Registriervorrichtung; und
eine Abrechnungsvorrichtung (1) nach einem der Ansprüche 1 bis 6.

## Revendications

1. Dispositif de règlement (1), comprenant :
un premier composant de lecture (50a) configuré pour lire un symbole (B) attaché à un article (S) lorsqu'il est situé dans une première région de lecture (R1) ;
**caractérisé par**
au moins un second composant de lecture (50d) configuré pour lire le symbole (B) attaché à l'article (S) lorsqu'il est situé dans une seconde région de lecture (R2) complètement séparée de la première région de lecture (R1) ; et
un dispositif émetteur de lumière (50b) disposé dans le premier composant de lecture (50a),
dans lequel l'au moins un second composant de lecture (50d) n'inclut pas de source lumineuse.

2. Dispositif de règlement (1) selon la revendication 1, dans lequel
le premier composant de lecture (50a) et le second composant de lecture (50d) incluent chacun respectivement une caméra (50f, 50g) qui image l'article (S), et
le dispositif émetteur de lumière (50b) est une source lumineuse pour le premier composant de lecture (50a) et le second composant de lecture (50d) afin de faciliter l'imagerie de l'article (S).

3. Dispositif de règlement (1) selon la revendication 1 ou la revendication 2, dans lequel
la source lumineuse émet de la lumière pendant un temps prédéterminé à un intervalle de temps fixe, et
le dispositif de règlement (1) comprend en outre un composant d'imagerie (302) configuré pour exposer le premier composant de lecture (50a) et le second composant de lecture (50d) à la lumière et imageant l'article (S) en synchronisation avec le moment d'émission de lumière de la source lumineuse.

4. Dispositif de règlement (1) selon l'une quelconque des revendications 1 à 3, dans lequel un temps d'imagerie du second composant de lecture (50d) est plus long qu'un temps d'imagerie du premier composant de lecture (50a).

5. Dispositif de règlement (1) selon l'une quelconque des revendications 1 à 4, dans lequel le second composant de lecture (50a) est moins visible que le premier composant de lecture (50d).

6. Dispositif de règlement (1) selon l'une quelconque des revendications 1 à 5, comprenant une pluralité de seconds composants de lecture (50d).

7. Procédé de règlement mis en œuvre par un dispositif de règlement (1) comprenant un premier composant de lecture (50a), un second composant de lecture (50d) et un dispositif émetteur de lumière (50b), le procédé comprenant :
par le premier composant de lecture (50a), lire un symbole (B) attaché à un article (S) lorsqu'il est situé dans une première région de lecture (R1) par un premier composant de lecture (50a) ;
par le second composant de lecture (50d), lire le symbole (B) attaché à l'article (S) lorsqu'il est situé dans une seconde région de lecture (R2) complètement séparée de la première région de lecture (R1) par au moins un second composant de lecture (50d) ; et
par le dispositif émetteur de lumière (50b), émettre la lumière vers au moins la première région de lecture (R1), dans lequel le dispositif émetteur de lumière (50b) est prévu dans le premier composant de lecture (50a),
dans lequel le second composant de lecture (50d) n'inclut pas de source lumineuse.

8. Procédé de règlement selon la revendication 7, comprenant en outre les étapes consistant à :
par le premier composant de lecture (50a), imager l'article (S) dans la première région de lecture (R1) ;
par le second composant de lecture (50b), imager l'article (S) dans la seconde région de lecture (R2) ; et
par le dispositif émetteur de lumière (50b), émettre la lumière vers la première région de lecture (R1) et la seconde région de lecture (R2) afin de faciliter l'imagerie de l'article (S).

9. Procédé de règlement selon la revendication 7 ou la revendication 8, comprenant en outre les étapes consistant à :
par le dispositif émetteur de lumière (50b), émettre la lumière pendant un temps prédéterminé à un intervalle de temps fixe ; et
par le dispositif émetteur de lumière (50b), exposer le premier composant de lecture (50a) et le second composant de lecture (50b) à la lumière et, par le premier composant de lecture (50a) et par le second composant de lecture (50b), imager l'article (S) en synchronisation avec le moment d'émission de lumière.

10. Procédé de règlement selon l'une quelconque des revendications 7 à 9, dans lequel un temps d'imagerie du second composant de lecture (50d) est plus long qu'un temps d'imagerie du premier composant de lecture (50a).

11. Appareil de caisse en libre-service (100), comprenant :
un dispositif d'enregistrement ; et
un dispositif de règlement (1) selon l'une quelconque des revendications 1 à 6.
